# EUROPÄISCHE PATENTANMELDUNG

(11) **EP 3 527 819 A1**
(43) Veröffentlichungstag der Anmeldung: **21.08.2019**
(21) Anmeldenummer: 19155401.3
(22) Anmeldetag: 05.02.2019
(51) Int. Cl.: F03D 80/00, F03D 13/25, F03D 13/00, H02B 1/00, H02J 3/38, B63B 35/44

(54) **DACHKONSTRUKTION FÜR EINE OFFSHORE-UMSPANNSTATION**

(30) Priorität: 16.02.2018 DE 102018103555
(71) Anmelder: Innogy SE, 45128 Essen (DE)
(72) Erfinder: RUNGE, Dr. Jörn, 31608 Marklohe (DE); BARTMINN, Daniel, 25335 Elmshorn (DE); ESKEN, Matthias, 21220 Seevetal (DE)
(74) Vertreter: Cohausz & Florack

(57) **Zusammenfassung**

Die Anmeldung betrifft eine Bauelementdachkonstruktion (200, 300) einer Bauelementvorrichtung (204) einer Offshore-Umspannstation (202, 302, 402), umfassend mindestens eine im Wesentlichen vertikale Seitenwand (208, 308), die zum Tragen mindestens eines Dachabschnitts (210, 310) und zum Bereitstellen mindestens einer Konvektionsöffnung (214, 314) eingerichtet ist, wobei 319 der mindestens eine von der Seitenwand (208, 308) getragene Dachabschnitt (210, 310) mindestens eine im Wesentlichen horizontale Dachfläche (220, 320) aufweist.

## Beschreibung

Die Anmeldung betrifft eine Bauelementdachkonstruktion einer elektrischen Bauelementvorrichtung einer Offshore-Umspannstation, umfassend mindestens eine im Wesentlichen vertikale Seitenwand, die zum Tragen mindestens eines Dachabschnitts und zum Bereitstellen mindestens einer Konvektionsöffnung eingerichtet ist. Darüber hinaus betrifft die Anmeldung eine Offshore-Umspannstation und eine Verwendung einer Bauelementdachkonstruktion.

Unter einer elektrischen Bauelementvorrichtung ist in der vorliegenden Anmeldung eine Transformator-, Generator-, Motor- und/oder Spulenvorrichtung zu verstehen. In entsprechender Weise ist in der vorliegenden Anmeldung unter einer Bauelementdachkonstruktion eine Transformator-, Generator-, Motor- und/oder Spulendachkonstruktion zu verstehen.

Offshore-Windkraftsysteme bzw. Offshore-Windparks werden vermehrt für die Erzeugung von elektrischer Energie eingesetzt. Ein Offshore-Windpark umfasst in der Regel eine Mehrzahl von Offshore-Windkraftanlagen, die mit mindestens einer Offshore-Umspannstation verbunden sind. Die von einer Offshore-Windkraftanlage in elektrische Energie umgewandelte kinetische Energie des Winds wird über elektrische Energiekabel, insbesondere Seekabel, an die Offshore-Umspannstation übertragen. Die Offshore-Umspannstation ist wiederum über mindestens ein Seekabel mit einer Onshore-Station verbunden, um beispielsweise die bereitgestellte elektrische Energie in ein öffentliches Stromnetz einzuspeisen.

Eine Offshore-Umspannstation weist mindestens eine Bauelementvorrichtung mit mindestens einer Bauelementkomponente auf. Beispielsweise kann eine Transformatorvorrichtung insbesondere mindestens einen Hochspannungstransformator und/oder mindestens eine Hochspannungskompensationseinheit umfassen. Da bei derartigen elektrischen Komponenten während des Betriebs aufgrund der hohen Ströme erhebliche Wärme entsteht, ist eine ausreichende Kühlung der elektrischen Komponenten einer Bauelementvorrichtung unerlässlich.

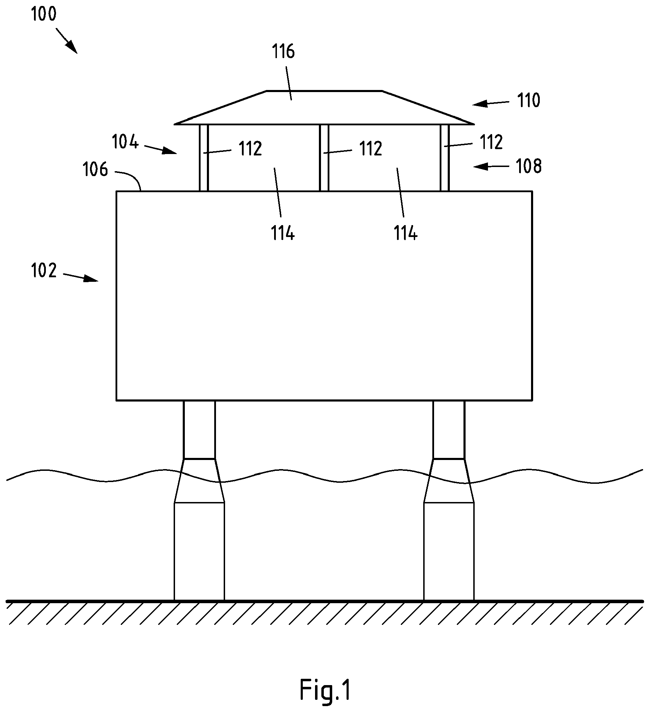

Aus dem Stand der Technik ist es bekannt, auf dem Oberdeck der Offshore-Umspannstation, das auch als "Roofdeck" bezeichnet wird, eine Bauelementdachkonstruktion mit mindestens einer Konvektionsöffnung zur Kühlung der mindestens einen Bauelementkomponente anzuordnen. Die Figur 1 zeigt eine schematische Ansicht eines Beispiels einer Bauelementdachkonstruktion in Form einer Transformatordachkonstruktion 100 einer Offshore-Umspannstation gemäß dem Stand der Technik.

Die in der Figur 1 dargestellte Offshore-Umspannstation 102 weist mindestens eine Transformatorvorrichtung 104 mit mindestens einer (nicht dargestellten) Transformatorkomponente, wie einem Hochspannungstransformator, und mindestens einer Transformatordachkonstruktion 100 auf.

Wie aus der Figur 1 zu erkennen ist, ist die Transformatordachkonstruktion 100 der Transformatorvorrichtung 104 auf dem Oberdeck 106 der Offshore-Umspannstation 102 angeordnet. Die Transformatordachkonstruktion 100 umfasst mindestens eine vertikale (beispielsweise umlaufende) Seitenwand 108 und einen Dachabschnitt 110.

Die vertikale Seitenwand 108 umfasst eine Mehrzahl von vertikalen Stützen 112. Die Zwischenräume 114 bzw. Öffnungen 114 zwischen den vertikalen Stützen 112 bilden Konvektionsöffnungen 114. Die Konvektionsöffnungen 114 ermöglichen einen Luftstrom entlang der mindestens einen Transformatorkomponente der Transformatorvorrichtung 104. Hierdurch kann eine ausreichende Kühlung der mindestens einen Transformatorkomponente bereitgestellt werden.

Der Dachabschnitt 110 gemäß dem Stand der Technik weist eine geneigte Dachfläche 116 auf. Insbesondere ist der Dachabschnitt 110 nur als Regen und Schneeschutz ausgelegt, indem der Dachabschnitt 110 als Schrägdach mit mindestens einer geneigten Dachfläche 116 gebildet ist. Beispielsweise kann der Dachabschnitt 110 als Satteldach, Bogendach, Pultdach etc. gebildet sein, dessen Tragfähigkeit ausreichend ist, um eine dünne Schicht Schnee zu tragen.

Die vertikalen Stützen 112 der Seitenwand 108 dienen beim Stand der Technik einerseits zur Bildung der Konvektionsöffnungen 114 und andererseits zum Tragen der geneigten Dachfläche 116 des Dachabschnitts 110.

Ein stetiges Problem einer zuvor beschriebenen Offshore-Umspannstation besteht in dem geringen auf der Offshore-Umspannstation zur Verfügung stehenden Platzangebot. Beispielsweise besteht auf einer Offshore-Umspannstation auf dem Oberdeck regemäßig ein Platzbedarf für die Anordnung von mindestens einem Objekt, wie weiterem technischen Equipment, einem Lagerraum, einem Container etc. Insbesondere bei der Planung des Windparks und damit der Offshore-Umspannstation und/oder bei der Installation der Offshore-Umspannstation war die Notwendigkeit des zusätzlichen Objekts nicht bekannt. Beispielhafte Anlässe für den gestiegenen Platzbedarf werden nachfolgend erläutert:
Der Lagerbedarf von Materialien oder der Bedarf an Wohncontainern und/oder Bürocontainern wurde in der Planungsphase der Offshore-Umspannstation nicht erkannt. Auch kann es sein, dass in der Planungsphase bestimmtes technisches Equipment, wie bestimmte elektrotechnische Bauteile, als nicht notwendig erachtet wurden, weil z.B. der Bedarf noch nicht erkannt wurde oder noch nicht vorlag. Ein Beispiel hierfür ist ein Filter für Oberschwingungen, welche in der Planungsphase nicht berechnet oder am Anfang des Betriebs der Offshore-Umspannstation nicht aufgetreten sind, aber zum Beispiel durch neue Nachbarwindparks oder neue Netzanschlusssysteme (HGÜ oder AC) auftreten können.

Weiterhin sind nachträgliche Blindleistungskompensationsanlagen oder künstliche Lasten/Statcoms für den Inselnetzbetrieb denkbar, da deren Notwendigkeit erst mit der Entwicklung der Offshore-Netze oder wegen neuer Windpark-Reglungstechnologie notwendig werden. Ein weiterer Anlass für zusätzlichen Platzbedarf für mindestens ein Objekt kann sich aus der Notwendigkeit ergeben, zusätzliche Systeme für neue Kommunikations- oder Detektionstechnologien (z.B. für den Fall, dass eine Kommunikationstechnik (z.B. LWL-Kabel) oder Detektionstechnologie nicht mehr zur Verfügung steht) zu installieren. Auch kann die Installation von neuen Kommunikations- oder Detektionstechnologien oder - systemen aufgrund von behördlichen Auflagen erforderlich werden. Darüber hinaus kann auch der Fall auftreten, dass Dritte ihre Systeme auf der Offshore-Umspannstation bzw. -plattform installieren möchten. Schließlich kann sich ein zusätzlicher Platzbedarf aus der Notwendigkeit zusätzlicher Rettungsmittel (z.B. Rettungsboote oder -inseln) ergeben.

Daher liegt der Anmeldung die Aufgabe zugrunde, eine Vorrichtung für eine Offshore-Umspannstation eines Offshore-Windparks bereitzustellen, die das Platzangebot auf der Offshore-Umspannstation, insbesondere dem Oberdeck der Offshore-Umspannstation, für die Anordnung von mindestens einem Objekt erhöht.

Die Aufgabe wird gemäß einem ersten Aspekt der Anmeldung durch eine Bauelementdachkonstruktion einer Bauelementvorrichtung einer Offshore-Umspannstation nach Anspruch 1 gelöst. Die Bauelementdachkonstruktion umfasst mindestens eine im Wesentlichen vertikale Seitenwand. Die Seitenwand ist zum Tragen mindestens eines Dachabschnitts eingerichtet. Die Seitenwand ist zum Bereitstellen mindestens einer Konvektionsöffnung eingerichtet. Der mindestens eine von der Seitenwand getragene Dachabschnitt weist mindestens eine im Wesentlichen horizontale Dachfläche auf.

Indem im Gegensatz zum Stand der Technik eine Bauelementdachkonstruktion, insbesondere eine Transformatordachkonstruktion, mit mindestens einer horizontalen Dachfläche bereitgestellt wird, wird das Platzangebot auf der Offshore-Umspannstation, insbesondere dem Oberdeck der Offshore-Umspannstation, für die Anordnung von mindestens einem weiteren Objekt, umfassend weiteres technisches Equipment, Lagerräume, Container etc., erhöht. So ist die horizontale Dachfläche dazu eingerichtet, dass das Objekt auf dieser Dachfläche angeordnet werden kann.

Die Bauelementdachkonstruktion ist insbesondere Teil der Bauelementvorrichtung einer Offshore-Umspannstation eines Offshore-Windparks. Der Offshore-Windpark bzw. das Offshore-Windenergiesystem weist insbesondere eine Mehrzahl von Offshore-Windkraftanlagen auf. Die Offshore-Windkraftanlagen sind elektrisch mit der Offshore-Umspannstation über Seekabel verbunden. Eine Offshore-Windkraftanlage wandelt die kinetische Energie des Windes mittels eines Rotors und eines Generators in elektrische Energie um, welche über die Seekabel an die Offshore-Umspannstation übertragen wird. Die Offshore-Umspannstation kann elektrisch mit einer Onshore-Station, wie eine Hochspannungs-Gleichstrom-Übertragungs-(HGÜ-) Station, verbunden sein. Eine elektrische Verbindung kann insbesondere durch mindestens ein Seekabel realisiert sein. An der oberspannungs- oder unterspannungsseitigen Wicklung des Transformators kann mindestens ein elektrischer Parameter erfasst werden, um die in das Stromnetz eingespeiste Leistung bzw. den eingespeisten Strom zu regeln.

Die Offshore-Umspannstation umfasst mindestens eine Bauelementvorrichtung, insbesondre mindestens eine Transformatorvorrichtung. Die Bauelementvorrichtung weist neben der Bauelementdachkonstruktion mindestens eine (elektrische) Bauelementkomponente auf. Beispielsweise kann eine Transformatorvorrichtung einen oder mehrere Transformator(en), eine oder mehrere Hochspannungskompensationseinheit(en) etc. umfassen. Eine derartige Transformatorvorrichtung ist dazu eingerichtet, hohe Ströme im 1000 A Bereich zu verarbeiten.

Die Bauelementdachkonstruktion umfasst im Wesentlichen zwei Abschnitte. Insbesondere umfasst die Bauelementdachkonstruktion mindestens einen Dachabschnitt und als weiteren Abschnitt mindestens eine Seitenwand. Die Seitenwand ist insbesondere eine vertikale Seitenwand. Sie kann umlaufend gebildet und beispielsweise mehrteilig ausgebildet sein. Die im Wesentlichen vertikale Seitenwand ist eingerichtet, mindestens eine Konvektionsöffnungen bereitzustellen. Vorzugsweise kann eine Mehrzahl von Konvektionsöffnung bereitgestellt sein. Mit anderen Worten kann die Seitenwand mindestens eine Öffnung aufweisen. Durch die Öffnung kann Luft zur Kühlung der mindestens einen Bauelementkomponente der Bauelementvorrichtung strömen.

Darüber hinaus ist die vertikale Seitenwand dazu eingerichtet, den Dachabschnitt zu tragen. Mit anderen Worten ist an der Seitenwand der Dachabschnitt befestigt. Im Gegensatz zum Stand der Technik weist der anmeldungsgemäße Dachabschnitt eine horizontale bzw. ebene Dachfläche auf. Vorzugsweise kann nahezu der gesamte Dachabschnitt der anmeldungsgemäßen Bauelementdachkonstruktion durch eine horizontale Dachfläche gebildet sein. Indem anmeldungsgemäß die Dachfläche nicht hinsichtlich Regen- und Schneeschutz optimiert ist, sondern hinsichtlich eines vergrößerten Raumangebots, können zusätzliche - während der Planungsphase nicht berücksichtigte - Objekte auf der Offshore-Umspannstation angeordnet werden.

Gemäß einer ersten Ausführungsform der anmeldungsgemäßen Bauelementdachkonstruktion kann die horizontale Dachfläche mindestens einen horizontalen Träger aufweisen. Vorzugsweise kann eine Mehrzahl von horizontalen Trägern vorgesehen sein. Die vertikale Seitenwand kann mindestens eine vertikale Stütze aufweisen. Vorzugsweise kann eine Mehrzahl von vertikalen Stützen vorgesehen sein. Die mindestens eine Stütze kann mit dem mindestens einen Träger verbunden, vorzugsweise zumindest kraftschlüssig verbunden, sein.

Der mindestens eine horizontale Träger und die mindestens eine vertikale Stütze können zum Tragen einer Flächenlast von mindestens 1,5 kN/m², vorzugsweise von mindestens 2,5 kN/m², eingerichtet sein. Vorzugsweise sind eine Mehrzahl von horizontalen Trägern und vertikalen Stützen vorgesehen. Ein horizontaler Träger ist vorzugsweise mit zumindest zwei Stützen kraftschlüssig verbunden. Beispielsweise kann ein Träger an einer Stütze angeklebt, angeschweißt, angenietet und/oder angeschraubt sein. Indem vorzugsweise die Mehrzahl dieser Träger und Stützen eingerichtet ist, eine Flächenlast von mindestens 1,5 kN/m², vorzugsweise von mindestens 2,5 kN/m², zu tragen, kann anmeldungsgemäß eine Schwerlastdachkonstruktion bereitgestellt werden. Auch schwere Objekte können daher auf der neu geschaffenen horizontalen Dachfläche angeordnet werden.

Um eine Bauelementdachkonstruktion mit einer (Bemessungs-) Flächenlast von mindestens 1,5 kN/m² bereitzustellen, kann gemäß einer bevorzugten Ausführungsform der mindestens eine horizontal verlaufende Träger und/oder die mindestens eine vertikal verlaufende Stütze ein Stahlwalzprofil, Stahlschweißprofil, ein Profil aus Holz, ein Profil aus GFK (Glasfaserverstärkter Kunststoff), ein Profil aus CFK (Kohlenstofffaserverstärkter Kunststoff), ein Profil aus Beton oder dergleichen aufweisen.

Für eine weitere Verbesserung der Tragfähigkeit und der Stabilität der Bauelementdachkonstruktion kann gemäß einer weiteren Ausführungsform der Bauelementdachkonstruktion die vertikale Seitenwand mindestens eine Querstrebe aufweisen. Die mindestens eine Querstrebe kann an einer ersten vertikalen Stütze und an mindestens einer weiteren vertikalen Stütze angeordnet sein. Insbesondere kann die Querstrebe zumindest kraftschlüssig mit der ersten vertikalen Stütze und der weiteren vertikalen Stütze befestigt sein. Die mindestens eine Querstrebe kann derart an einer vertikalen Stütze angeordnet sein, dass die kritische Knicklänge der vertikalen Stütze verkürzt wird. Vorzugsweise kann eine Mehrzahl von Querstreben angeordnet sein, wobei sich eine erste Querstrebe von einer ersten vertikalen Stütze zu einer zweiten vertikalen Stütze in einer ersten vertikalen Ebene erstreckt und mindestens eine weitere Querstrebe von der ersten vertikalen Stütze zu einer dritten vertikalen Stütze in einer weiteren vertikalen Ebene erstreckt.

Hierbei kann nur die zweite Stütze (und nicht die dritte Stütze) unmittelbar benachbart zu der ersten Stütze sein. Indem Querstreben in mindestens zwei unterschiedlichen vertikalen Ebenen, insbesondere in drei unterschiedlichen vertikalen Ebenen, von einer ersten Stütze zu mindestens zwei weiteren Stützen verlaufen, kann die Tragfähigkeit und die Stabilität der Bauelementdachkonstruktion weiter verbessert werden. Zudem kann mindestens eine Querstrebe zwischen dem mindestens einen horizontalen Träger und der mindestens einen vertikalen Stütze angeordnet sein. Insbesondere kann diese Querstrebe mit der vertikalen Stütze und mit dem horizontalen Träger kraftschlüssig verbunden sein.

Bevorzugt kann die mindestens eine Seitenwand aus vertikalen Stützen, horizontalen Trägern und Querstreben gebildet sein. Auch kann eine Seitenwand einen Fachwerkaufbau aufweisen. Insbesondere kann eine Seitenwand durch einen Momentrahmen (z.B. Vierendeelträger) gebildet sein. Alternativ oder zusätzlich kann die vertikale Seitenwand gemäß einer weiteren Ausführungsform mindestens eine Platte mit mindestens einer Konvektionsöffnung umfassen. Die vertikale Platte kann zumindest kraftschlüssig mit mindestens einer Stütze der Seitenwand verbunden sein. Hierdurch kann die Seitenwand eine sogenannte starre Scheibe ausbilden. Die Tragfähigkeit und die Stabilität der Bauelementdachkonstruktion können noch weiter erhöht werden

Ferner ist erkannt worden, dass für eine optimale Ableitung von auf die Bauelementdachkonstruktion wirkenden (im Wesentlichen vertikal verlaufenden) Kräften gemäß einer weiteren Ausführungsform der Bauelementdachkonstruktion die mindestens eine vertikale Stütze zum kraftschlüssigen Verbinden mit mindestens einem (horizontal verlaufenden) Träger des Oberdecks eingerichtet sein kann. Insbesondere kann ein Ende, insbesondere der Fuß, der mindestens einen vertikalen Stütze zum kraftschlüssigen Verbinden mit dem (horizontal verlaufenden) Träger des Oberdecks eingerichtet sein. Beispielsweise kann die vertikale Stütze zum Verschrauben, Verschweißen, Vernieten und/oder Verkleben mit dem (horizontal verlaufenden) Träger des Oberdecks eingerichtet sein.

Gemäß einer weiteren Ausführungsform der anmeldungsgemäßen Bauelementdachkonstruktion kann die horizontale Dachfläche eine Mehrzahl von Twistlocks aufweisen. Ein Twistlock ist eine (Standard-)Verriegelung, mit der ein Wechselbehälter und/oder ISO-Container mit der horizontalen Dachfläche (sicher) verbunden werden kann. Neben der hierdurch besonders einfachen und gleichzeitig sicheren Anordnung eines Objekts auf der horizontalen Dachfläche der Bauelementdachkonstruktion wird hierdurch zudem erreicht, dass das mindestens eine angeordnete Objekt (vorzugsweise ein Container) strukturell zur Aussteifung und Lastverteilung der Bauelementdachkonstruktion beiträgt.

Darüber hinaus kann gemäß einer Ausführungsform der Bauelementdachkonstruktion vorgesehen sein, dass die Seitenwand mindestens eine Treppe und/oder mindestens eine Leiter aufweist. Hierdurch kann eine einfache Zugänglichkeit der horizontalen Dachfläche und damit des auf der horizontalen Dachfläche angeordneten Objekts bereitgestellt werden.

Vorzugsweise kann gemäß einer weiteren Ausführungsform in dem Dachabschnitt und/oder in der Seitenwand eine Recheneinrichtung (z.B. Computer oder dergleichen) integriert sein. Die Rechenleistung der mindestens einen Recheneinrichtung kann insbesondere dem mindestens einen auf der horizontalen Dachfläche anordnenbaren Objekt bereitgestellt werden. Beispielsweise kann die Recheneinrichtung über eine drahtlose Kommunikationsschnittstelle verfügen.

Alternativ oder zusätzlich kann in dem Dachabschnitt und/oder der Seitenwand ein drahtgebundenes Kommunikationsnetz integriert sein. Beispielsweise können Datenleitungen in der Seitenwand und/oder dem Dachabschnitt integriert sein. Zumindest an der Oberseite der horizontalen Dachfläche kann mindestens ein Kommunikationsnetzanschluss (z.B. ein Stecker oder eine Steckdose), vorzugsweise eine Mehrzahl von Kommunikationsnetzanschlüssen, für mindestens ein auf der horizontalen Dachfläche anordnenbares Objekt angeordnet sein. Das Objekt kann über eine zu dem mindestens einen Kommunikationsnetzanschluss der horizontalen Dachfläche korrespondierenden Anschluss verfügen. In einfacher Weise können Objekte, die auf der horizontalen Dachfläche angeordnet werden, mit einem Kommunikationsnetz verbunden werden. Hierbei kann das in der Bauelementdachkonstruktion integrierte Kommunikationsnetz mit dem Datennetz der Offshore-Umspannstation und/oder einem weiteren Datennetz (z.B. Internet) verbunden sein.

Alternativ oder zusätzlich kann in dem Dachabschnitt und/oder der Seitenwand ein Energiekabelverteilnetz integriert sein. Beispielsweise können elektrische leitfähige Leitungen in der Seitenwand oder dem Dachabschnitt integriert sein. Zumindest an der Oberseite der horizontalen Dachfläche kann mindestens ein Energienetzanschluss, vorzugsweise eine Mehrzahl von Energienetzanschlüssen, für mindestens ein auf der horizontalen Dachfläche anordnenbares Objekt angeordnet sein. Das Objekt kann über einen zu dem mindestens einen Energienetzanschluss der horizontalen Dachfläche korrespondierenden Anschluss verfügen. In einfacher Weise können Objekte, die auf der horizontalen Dachfläche angeordnet werden, mit elektrischer Energie versorgt werden. Hierbei kann das integrierte Energienetz mit dem Energienetz der Offshore-Umspannstation verbunden sein.

Gemäß einer weiteren Ausführungsform der Bauelementdachkonstruktion kann in dem Dachabschnitt und/oder der Seitenwand ein Luft- oder Flüssigkeitskühlsystem (beispielsweise ein Rohrsystem zum Leiten des Kühlmediums) integriert sein. Zumindest an der Oberseite der horizontalen Dachfläche kann mindestens ein Luft- oder Flüssigkeitskühlsystemanschluss für mindestens ein auf der horizontalen Dachfläche anordnenbares Objekt angeordnet ist. Das Luft- oder Flüssigkeitskühlsystem kann ein passives oder aktives System (mit einem Ventilator oder einer Pumpe oder dergleichen) sein. In einfacher Weise können Objekte, die auf der horizontalen Dachfläche angeordnet werden, gekühlt und insbesondere mit einem Kühlmedium versorgt werden.

Die anmeldungsgemäße Bauelementdachkonstruktion kann alternativ oder zusätzlich zu einer Bauelementdachkonstruktion gemäß dem Stand der Technik verwendet werden. Wie noch beschrieben werden wird, kann die Bauelementdachkonstruktion derart gebildet sein, dass sie beispielsweise eine herkömmliche Bauelementdachkonstruktion mit einer schrägen Dachfläche überspannt. Insbesondere ist die anmeldungsgemäße Bauelementdachkonstruktion derart gebildet, dass eine Offshore-Umspannstation mit dieser Bauelementdachkonstruktion nachgerüstet werden kann. Die anmeldungsgemäße Bauelementdachkonstruktion kann weitere geneigte Dachflächen oder dergleichen (zusätzlich) überspannen. Hierdurch kann auf einer bestehenden Offshore-Umspannstation weiterer Raum für die Anordnung von Objekten bereitgestellt werden.

Ein weiterer Aspekt der Anmeldung ist eine Offshore-Umspannstation. Die Offshore-Umspannstation umfasst mindestens ein Oberdeck. Die Offshore-Umspannstation umfasst mindestens eine auf dem Oberdeck angeordnete und zuvor beschriebene Bauelementdachkonstruktion.

Die Offshore-Umspannstation ist insbesondere eine zuvor beschriebene Offshore-Umspannstation eines Offshore-Windparks bzw. eines Offshore-Windenergiesystems. Die mindestens eine Bauelementvorrichtung der Offshore-Umspannstation kann insbesondere die mindestens eine Bauelementdachkonstruktion aufweisen. Die Bauelementdachkonstruktion kann neben mindestens einer Bauelementkomponente mindestens eine weitere Komponente der Offshore-Umspannstation überspannen.

Wie bereits beschrieben wurde, kann bei einer anmeldungsgemäßen Offshore-Umspannstation nur eine (oder mehrere) anmeldungsgemäße Bauelementdachkonstruktion(en) vorgesehen sein. Mit anderen Worten ersetzt in diesem Fall die anmeldungsgemäße Bauelementdachkonstruktion die Bauelementdachkonstruktion mit geneigten Dachflächen gemäß dem Stand der Technik. Gemäß einer ersten Ausführungsform der anmeldungsgemäßen Offshore-Umspannstation kann die horizontale Dachfläche der (anmeldungsgemäßen) Bauelementdachkonstruktion mindestens eine weitere Dachkonstruktion, insbesondere eine Bauelementdachkonstruktion gemäß dem Stand der Technik, mit mindestens einer geneigten Dachfläche zumindest teilweise überspannen. Insbesondere kann das Raumangebot bei bereits im Betrieb befindlichen Offshore-Umspannstationen in einfacher Weise erhöht werden, indem die bereits vorhandene Bauelementdachkonstruktion mit geneigter Dachfläche mit einer Bauelementdachkonstruktion mit horizontaler Dachfläche überbaut wird.

Wenn auf der Offshore-Umspannstation bereits eine Dachkonstruktion oder dergleichen existiert, kann gemäß einer Ausführungsform mindestens eine bestehende vertikale Stütze (z.B. der bestehenden Dachkonstruktion) durch mindestens eine neue vertikale Stütze ergänzt oder durch eine neue vertikale Stütze mit erhöhter axialer Tragfähigkeit ersetzt werden. Alternativ oder zusätzlich kann eine bestehende vertikale Stütze in ihrer Tragfähigkeit erhöht werden, indem mindestens eine (zuvor beschriebene) Querstrebe angeordnet wird und/oder der Bruttoquerschnitt der bestehenden Stütze durch angebrachte Platten, insbesondere mindestens einer aufgeklebten, aufgeschweißten, angeschraubten und/oder angenieteten Platte, erhöht wird.

Gemäß einer bevorzugten Ausführungsform der anmeldungsgemäßen Offshore-Umspannstation kann mindestens eine vertikale Stütze der vertikalen Seitenwand, vorzugsweise eine Mehrzahl von vertikalen Stützen der vertikalen Seitenwand, der Bauelementdachkonstruktion mit mindestens einem bestehenden (horizontal verlaufenden) Träger des Oberdecks zumindest kraftschlüssig verbunden sein. Indem eine kraftschlüssige Verbindung zwischen diesen Bauteilen hergestellt wird, kann die auf die horizontale Dachfläche einwirkende vertikale Kraft (gut) an die (vorhandenen) Stützen und Träger der Offshore-Umspannstation abgeleitet werden. Beispielsweise kann die kraftschlüssige Verbindung der mindestens einen vertikalen Stütze durch Verschrauben, Verschweißen, Vernieten und/oder Verkleben mit dem Träger des Oberdecks hergestellt sein. Es versteht sich, dass die kraftschlüssige Verbindung eine mittelbare kraftschlüssige Verbindung sein kann. Beispielsweise kann zwischen der vertikalen Stütze und dem Träger des Oberdecks ein weiteres Bauteil (z.B. horizontaler Träger der Bauelementdachkonstruktion) angeordnet sein. In diesem Fall kann eine anmeldungsgemäße kraftschlüssige Verbindung dadurch hergestellt werden, dass das weitere Bauteil kraftschlüssig mit der vertikalen Stütze und kraftschlüssig mit dem Träger des Oberdecks verbunden ist.

Vorzugsweise kann an dem bestehenden (horizontal verlaufenden) Träger des Oberdecks, der insbesondere eine kraftschlüssige Verbindung mit einer vertikalen Stütze der Bauelementdachkonstruktion aufweist, mindestens eine Verstärkung zumindest kraftschlüssig befestigt sein. Die Verstärkung kann vorzugsweise eine aus GFK, CFK, Stahl und/oder Beton gebildete Verstärkung sein. Beispielsweise kann die Verstärkung ein entsprechend gebildetes Blech (z.B. Flanschblech), eine entsprechend gebildete Lamelle, eine entsprechend gebildete Platte oder dergleichen sein. Vorzugsweise kann die Verstärkung angeklebt, angeschweißt, angenietet und/oder angeschraubt sein. Hierdurch kann bei einem bestehenden Träger der Offshore-Umspannstation die Tragfähigkeit erhöht werden.

Alternativ oder zusätzlich kann das Oberdeck der Offshore-Umspannstation neben dem mindestens einen bestehenden (horizontal verlaufenden) Träger des Oberdecks mindestens einen zusätzlichen parallel zu dem bestehenden Träger verlaufenden Träger aufweisen. Der zusätzliche Träger kann ein Stahlwalzprofil, Stahlschweißprofil, ein Profil aus Holz, ein Profil aus GFK (Glasfaserverstärkter Kunststoff), ein Profil aus CFK (Kohlenstofffaserverstärkter Kunststoff), ein Profil aus Beton oder dergleichen aufweisen. Indem der bestehende Träger des Oberdecks durch mindestens einen neuen vorzugsweise parallel zum dem bestehenden Träger verlaufenden horizontalen Träger ergänzt wird, kann der mindestens eine zusätzliche Träger die auf der horizontale Dachfläche anliegende Last (bzw. die entsprechende Kraft) aufnehmen und insbesondere horizontal an die nächsten vertikalen Lastabtragungspunkte des Oberdecks ableiten.

Gemäß einer weiteren Ausführungsform der anmeldungsgemäßen Offshore-Umspannstation kann an mindestens einem Träger des Oberdecks, insbesondere an einem Verbindungsbereich der zumindest kraftschlüssigen Verbindung zwischen der mindestens einen vertikalen Stütze der Seitenwand und dem mindestens einen Träger des Oberdecks, und an mindestens einer Stütze des Oberdecks mindestens eine Lastverteilungseinheit befestigt sein. Die Lastverteilungseinheit kann beispielsweise eine (Quer-)strebe sein. Die Lastverteilungseinheit kann aus GFK, CFK, Stahl, Holz und/oder Beton gebildet sein. Ferner kann die Lastverteilungseinheit, insbesondere die Strebe, kraftschlüssig mit dem Verbindungsbereich und kraftschlüssig mit der Stütze des Oberdecks verbunden sein.

Vorzugsweise kann an mindestens einer Auflagerstütze des mindestens einen die Bauelementdachkonstruktion aufnehmenden Träger eine weitere Lastverteilungseinheit zu mindestens einer benachbarten Stütze vorgesehen sein. Beispielsweise kann eine Momentverbindung hergestellt oder eine bereits vorhandene Momentverbindung verstärkt sein. Auch kann mindestens eine Verstrebung eingezogen sein.

Darüber hinaus kann vorzugsweise die Biegetragfähigkeit eines Trägers der Offshore-Umspannstation ertüchtigt werden. Insbesondere kann mindestens ein (unterer) Flansch durch mindestens eine Querstrebe gegen ein seitliches Ausweichen gesichert sein und/oder mindestens ein oberer Flansch mit der horizontalen Ebene (gegen seitlichen Ausweichen) verbunden sein.

Vorzugsweise können die Stützen und/oder Träger der Bauelementdachkonstruktion und/oder die Träger und/oder Stützen unterhalb des Oberdecks eine Verbundwirkung mit dem Oberdeck, insbesondere den Trägern und/oder Stützen des Oberdecks, besitzen.

Weiterhin kann unterhalb der Bauelementdachkonstruktion vorzugsweise ein Vierendeelträger durch Herstellung mindestens einer Momentverbindung mit den unterhalb angeordneten Trägern und/oder Stützen gebildet sein. Zudem kann gemäß einer weiteren vorteilhaften Ausführungsform die Bauelementdachkonstruktion in ein oberhalb des Oberdecks verlaufendes Gitterrost integriert sein. Das Gitterrost kann durch mindestens einen Vierendeel- und/oder Fachwerkträger gebildet sein. Das Gitterrost kann insbesondere derart auf dem Oberdeck angeordnet sein, dass die auf der horizontalen Dachfläche anliegende Last an die außen liegenden Stützpunkte bzw. -bereiche abgeleitet und verteilt werden kann

Auch kann vorteilhafterweise ein zusätzlich angebrachtes Bauteil (Stütze, Träger, Strebe, Lastverteilungseinheit und/oder Verstärkung) mittels Twistlocks an die bereits vorhandenen Bauteile (insbesondere Stütze, Träger) angeschlossen sein.

Ein noch weiterer Aspekt der Anmeldung ist eine Verwendung der zuvor beschriebenen Bauelementdachkonstruktion als Schwerlastdach zum Tragen von mindestens einem Objekt, insbesondere mit mindestens einer Flächenlast von mindestens 1,5 kN/m². Darüber hinaus kann die zuvor beschriebene Bauelementdachkonstruktion als Landeplatz für ein Luftfahrzeug, insbesondere für eine Drohne, verwendet werden.

Die Merkmale der Bauelementdachkonstruktion, Offshore-Substationen und Verwendungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, die anmeldungsgemäße Bauelementdachkonstruktion, die anmeldungsgemäße Offshore-Substationen und die anmeldungsgemäße Verwendung auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht einer Offshore-Substation gemäß dem Stand der Technik mit einer Bauelementdachkonstruktion gemäß dem Stand der Technik,
- Fig. 2: eine schematische Perspektivansicht eines Ausführungsbeispiels einer Offshore-Substation gemäß der vorliegenden Anmeldung mit einem Ausführungsbeispiel einer Bauelementdachkonstruktion gemäß der vorliegenden Anmeldung,
- Fig. 3: eine schematische (Schnitt-) Ansicht eines Ausführungsbeispiels einer Offshore-Substation gemäß der vorliegenden Anmeldung mit einem Ausführungsbeispiel einer Bauelementdachkonstruktion gemäß der vorliegenden Anmeldung, und
- Fig. 4: eine schematische Draufsicht eines Ausführungsbeispiels einer Offshore-Substation gemäß der vorliegenden Anmeldung.

In den Figuren werden für gleiche Elemente gleiche Bezugszeichen verwendet.

Nachfolgend wird eine Bauelementdachkonstruktion beispielhaft anhand von anmeldungsgemäßen Ausführungsbeispielen von Transformatordachkonstruktionen beschrieben. Die nachfolgenden Ausführungen sind auf Generator- Motor- und/oder Spulendachkonstruktionen übertragbar.

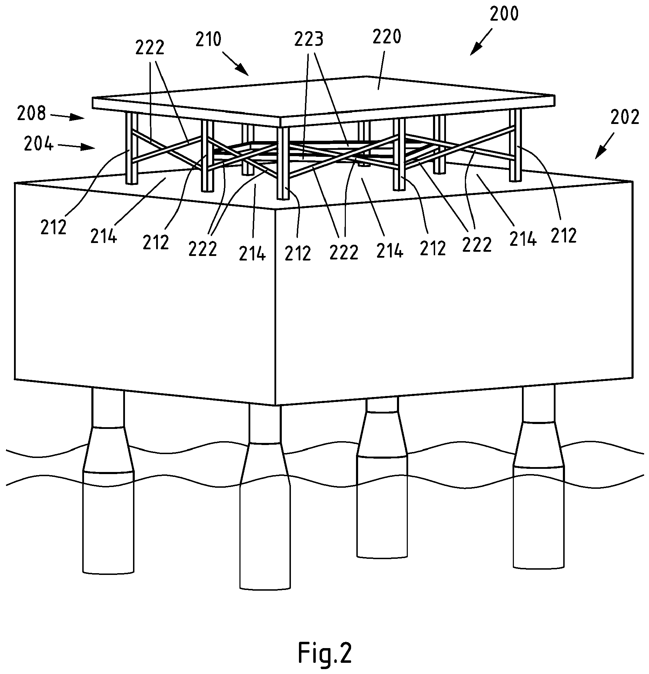

Die Figur 2 zeigt eine schematische Perspektivansicht eines Ausführungsbeispiels einer Offshore-Substation 202 gemäß der vorliegenden Anmeldung mit einem Ausführungsbeispiel einer Transformatordachkonstruktion 200 gemäß der vorliegenden Anmeldung.

Die Offshore-Umspannstation 202 weist mindestens eine Transformatorvorrichtung 204 mit mindestens einer (nicht dargestellten) (und zu kühlenden) Transformatorkomponente auf, wie mindestens einen Hochspannungstransformator. Die Transformatorvorrichtung 204 umfasst mindestens eine Transformatordachkonstruktion 200.

Die Transformatordachkonstruktion 200 ist auf dem Oberdeck 206 der Offshore-Umspannstation 202 angeordnet. Die Transformatordachkonstruktion 200 umfasst mindestens eine vertikale (beispielsweise umlaufende) Seitenwand 208 und einen Dachabschnitt 210. Die Seitenwand 208 kann, wie Figur 2 entnommen werden kann, mehrteilig und insbesondere aus vier vertikalen Teilwänden gebildet sein.

Die vertikale Seitenwand 208 umfasst eine Mehrzahl von vertikalen Stützen 212. Eine derartige Stütze 212 kann vorzugsweise aus GFK, CFK, Stahl und/oder Beton gebildet sein. Die Öffnungen 214 zwischen den vertikalen Stützen 212 bilden Konvektionsöffnungen 214. Die Konvektionsöffnungen 214 ermöglichen einen Luftstrom entlang der (nicht dargestellten) Transformatorkomponenten der Transformatorvorrichtung 204. Hierdurch kann eine ausreichende Kühlung der Transformatorkomponenten bereitgestellt werden. Darüber hinaus ist die vertikale Seitenwand 208 zum Tragen des Dachabschnitts 210 ausgebildet.

Der Dachabschnitt 210 umfasst mindestens eine horizontale Dachfläche 220. Insbesondere kann nahezu der gesamte Dachabschnitt 210 durch eine horizontale Dachfläche 220 gebildet sein. Beispielsweise kann die horizontale Dachfläche 220 durch (nicht gezeigte) horizontal verlaufende Träger (z.B. aus GFK, CFK, Stahl und/oder Beton) und mindestens eine darauf angeordnete (nicht gezeigte) Platte (aus GFK, CFK, Stahl und/oder Beton) gebildet sein. Vorzugsweise können die Bauteile (Stützen, Träger, Platte(n) etc.) der Transformatordachkonstruktion 200 kraftschlüssig miteinander verbunden sein.

Um die Tragfähigkeit weiter zu verbessern, können erste Querstreben 222 zwischen jeweils unmittelbar benachbarten vertikalen Stützen 212 angeordnet sein. Eine erste Strebe 222 kann insbesondere kraftschlüssig mit der entsprechenden Stütze 212 verbunden sein.

Vorzugsweise zusätzlich können zweite Streben 223 zwischen vertikalen Stützen 212 vorgesehen sein, die in einer anderen vertikalen Ebene als die ersten Streben 222 verlaufen. Es versteht sich, dass gemäß anderen Varianten mehr oder weniger Streben vorgesehen sein können und/der mindestens einen Strebe zwischen einer vertikalen Stütze und einem horizontalen Träger angeordnet sein kann. Auch können die Verbindungspunkte zwischen einer Strebe und einer vertikalen Stütze auf einer anderen Höhe der vertikalen Stütze liegen.

Optional können in der Transformatordachkonstruktion ein Kommunikationsnetz, ein Energiekabelverteilnetz und/oder ein Kühlsystem integriert sein. Die Oberseite der horizontalen Dachfläche 220 kann über entsprechende (nicht gezeigte) Anschlüsse verfügen, um beispielsweise im bestimmungsgemäßen Gebrauch ein auf der horizontalen Dachfläche 220 angeordnetes Objekt mit dem Kommunikationsnetz, Energiekabelverteilnetz und/oder Kühlsystem zu koppeln. Auch kann die horizontale Dachfläche 220 mit (nicht gezeigten) Twistlocks ausgestattet sein, um ein Objekt sicher anzuordnen.

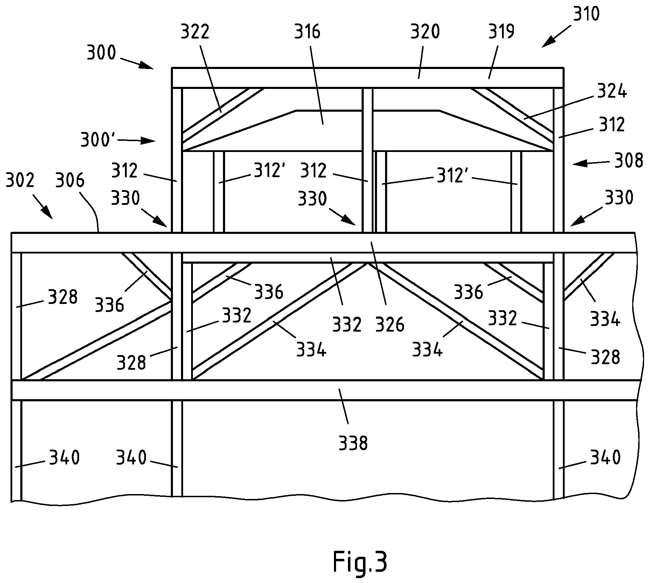

Die Figur 3 zeigt eine schematische Schnitt-Ansicht eines weiteren Ausführungsbeispiels einer Offshore-Substation 302 gemäß der vorliegenden Anmeldung mit einem Ausführungsbeispiel einer Transformatordachkonstruktion 300 gemäß der vorliegenden Anmeldung. Zur Vermeidung von Wiederholungen werden vorliegend im Wesentlichen nur die Unterschiede zu dem vorherigen Ausführungsbeispiel erläutert. Ansonsten wird auf die obigen Ausführungen verwiesen.

Auf dem Oberdeck 306 der Offshore-Substation 302 ist eine anmeldungsgemäße Transformatordachkonstruktion 300 befestigt. Wie zu erkennen ist, überspannt die Transformatordachkonstruktion 300 eine herkömmliche Dachkonstruktion 300', umfassend vertikale Stützen 312', die eine Seitenwand bilden, und eine geneigte Dachfläche 316, die den Dachabschnitt bildet.

Die anmeldungsgemäße Transformatordachkonstruktion 300 weist eine Mehrzahl von vertikalen Stützen 312 auf. Darüber hinaus sind Querstreben 322 zwischen Stützen 312 und dem Dachabschnitt 310, insbesondere mindestens einem horizontalen Träger 319 des Dachabschnitts 310, befestigt. Die vertikalen Stützen 312, insbesondere der jeweilige Fuß der vertikalen Stützen 312, ist vorliegend in einem Verbindungsbereich 330 kraftschlüssig mit einem horizontal verlaufenden Träger 326 des Oberdecks 306 verbunden. Vorzugsweise kann die kraftschlüssige Verbindung durch Verschrauben, Verschweißen, Verkleben und/oder Nieten hergestellt sein. Es versteht sich, dass das Oberdeck über eine Mehrzahl von horizontal verlaufenden Trägern verfügen kann.

Neben dem mindestens einen dargestellten Träger 326 verfügt das Oberdeck 306 über vertikal verlaufende Stützen 328. Wie zu erkennen ist, kann ein horizontal verlaufenden Träger 326 und/oder eine vertikal verlaufende Stütze 328 zumindest teilweise mit einer Verstärkung 332, beispielsweise einem kraftschlüssig angebrachten Blech 332 oder dergleichen, versehen sein. Hierdurch kann der Bruttoquerschnitt des Trägers bzw. der Stütze erhöht und somit die Tragfähigkeit verbessert werden.

Die mindestens eine Verstärkung 332 kann vorzugsweise eine aus GFK, CFK, Stahl und/oder Beton gebildete Verstärkung 332 (z.B. entsprechendes Blech oder entsprechende Lamelle) sein. Vorzugsweise kann die Verstärkung 332 angeklebt, angeschweißt, angenietet und/oder angeschraubt sein.

Darüber hinaus kann an mindestens einem horizontal verlaufenden Träger 326 des Oberdecks 306, insbesondere an einem Verbindungsbereich 330 der zumindest kraftschlüssigen Verbindung zwischen der mindestens einen vertikalen Stütze 314 der Seitenwand 308 und dem mindestens einen Träger 326 des Oberdecks 306, und an mindestens einer Stütze 328 des Oberdecks 306 mindestens eine Lastverteilungseinheit 334, 336 befestigt sein. Vorzugsweise kann eine Mehrzahl von Lastverteilungseinheiten, die vorzugsweise aus GFK, CFK, Stahl und/oder Beton gebildet sind, vorgesehen sein. Eine Lastverteilungseinheit 334, 336 kann bevorzugt kraftschlüssig befestigt sein.

Wie zu erkennen ist, kann eine Offshore-Substation 302 über eine Mehrzahl von Decks verfügen. Die weiteren Decks können gemäß weiteren Varianten der Anmeldung weitere Stützen 340 und Träger 338 aufweisen und insbesondere entsprechend den vorherigen Ausführungen verstärkt sein. Insbesondere können kraftschlüssige Verbindungen zwischen den verschiedenen Bauteilen hergestellt und/oder verstärkt sein. Vorzugsweise können die Stützen 312 und/oder Träger 319 der Transformatordachkonstruktion 302 und/oder die Träger 326 und/oder Stützen 328 des Oberdecks 306 und/oder die Träger 338 und/oder Stützen 340 des mindestens einen unterhalb des Oberdecks 306 angeordneten Decks eine Verbundwirkung miteinander besitzen, indem anmeldungsgemäße kraftschlüssige Verbindungen und/oder zusätzliche Streben 322, 334, 336 angeordnet werden.

In einfacher Weise kann das Raumangebot für die Anordnung von mindestens einem weiteren Objekt erhöht werden. Insbesondere kann die anmeldungsgemäße Transformatordachkonstruktion als Schwerlastdach zum Tragen von mindestens einem Objekt, insbesondere einem Objekt mit einer Flächenlast von mindestens 1,5 kN/m² verwendet werden.

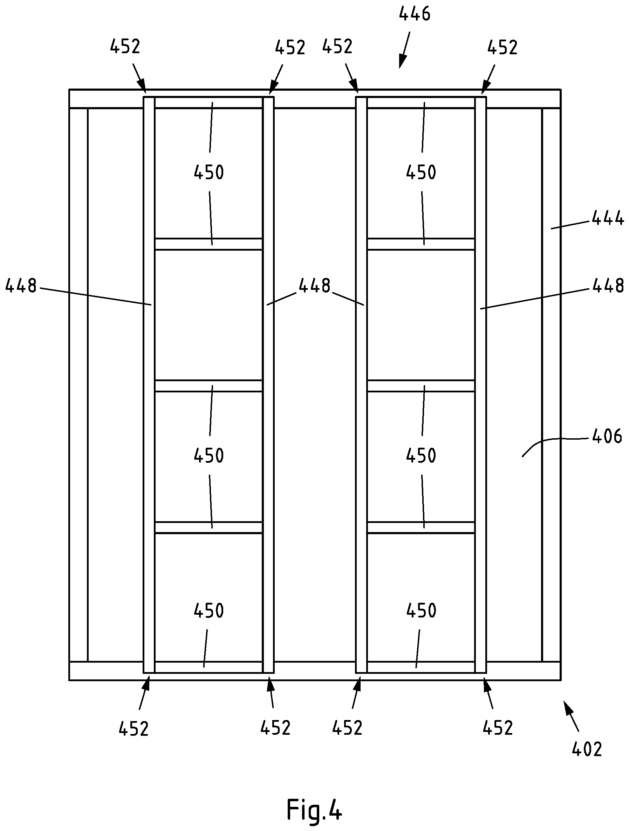

Die Figur 4 zeigt eine schematische Draufsicht eines Ausführungsbeispiels einer Offshore-Substation gemäß der vorliegenden Anmeldung. Zur Vermeidung von Wiederholungen werden vorliegend im Wesentlichen nur die Unterschiede zu den vorherigen Ausführungsbeispielen erläutert. Ansonsten wird auf die obigen Ausführungen verwiesen. Zu Gunsten einer besseren Übersicht wurde ferner auf eine Darstellung einer anmeldungsgemäßen Transformatordachkonstruktion verzichtet.

Wie zu erkennen ist, ist auf dem Oberdeck 406 der Offshore-Substation 402 ein Gitterrost angeordnet. Das Gitterrost kann durch mindestens einen Vierendeel- und/oder Fachwerkträger gebildet sein, der Längs- und Querträger 448, 450 umfasst. Eine zuvor beschriebene Transformatordachkonstruktion kann in das oberhalb des Oberdecks 406 verlaufende Gitterrost 446 integriert sein.

Das Gitterrost 446 kann insbesondere derart auf dem Oberdeck 406 angeordnet sein, dass die auf der horizontalen Dachfläche einer integrierten Transformatordachkonstruktion anliegende Last an die außen liegenden Stützpunkte bzw. -bereiche 452 der Offshore-Substation 402 abgeleitet und verteilt werden. Eine noch weiter verbesserte Tragfähigkeit kann in einfacher Weise hergestellt werden.

## Patentansprüche

1. Bauelementdachkonstruktion (200, 300) einer Bauelementvorrichtung (204) einer Offshore-Umspannstation (202, 302, 402), umfassend:
- mindestens eine im Wesentlichen vertikale Seitenwand (208, 308), die zum Tragen mindestens eines Dachabschnitts (210, 310) und zum Bereitstellen mindestens einer Konvektionsöffnung (214, 314) eingerichtet ist,
**dadurch gekennzeichnet, dass**
- der mindestens eine von der Seitenwand (208, 308) getragene Dachabschnitt (210, 310) mindestens eine im Wesentlichen horizontale Dachfläche (220, 320) aufweist.

2. Bauelementdachkonstruktion (200, 300) nach Anspruch 1, **dadurch gekennzeichnet, dass**
- die horizontale Dachfläche (220, 320) mindestens einen horizontalen Träger (319) aufweist,
- die vertikale Seitenwand (208, 308) mindestens eine vertikale Stütze (212, 312) aufweist, und
- der mindestens eine horizontale Träger (319) und die mindestens eine vertikale Stütze (212, 312) zum Tragen einer Flächenlast von mindestens 1,5 kN/m², vorzugsweise von mindestens 2,5 kN/m², eingerichtet sind.

3. Bauelementdachkonstruktion (200, 300) nach Anspruch 2, **dadurch gekennzeichnet, dass** die vertikale Seitenwand (208, 308) mindestens eine Querstrebe (222, 223, 322) aufweist, die an einer ersten vertikalen Stütze (212, 312) und an mindestens einer weiteren vertikalen Stütze (212, 312) und/oder dem horizontalen Träger (319) der horizontale Dachfläche (220, 320) angeordnet ist.

4. Bauelementdachkonstruktion (200, 300) nach einem der vorherigen Ansprüche, **dadurch gekennzeichnet, dass**
- die vertikale Seitenwand (208, 308) mindestens eine Platte mit mindestens einer Konvektionsöffnung umfasst,
- wobei die mindestens eine Platte zumindest kraftschlüssig mit mindestens einer Stütze (212, 312) der Seitenwand (208, 308) verbunden ist.

5. Bauelementdachkonstruktion (200, 300) nach einem der vorherigen Ansprüche, **dadurch gekennzeichnet, dass** die mindestens eine vertikale Stütze (212, 312) zum kraftschlüssigen Verbinden mit mindestens einem Träger (326) des Oberdecks (206, 306, 406) eingerichtet ist.

6. Offshore-Umspannstation (202, 302, 402), umfassend:
- mindestens ein Oberdeck (206, 306, 406), und
- mindestens eine auf dem Oberdeck (206, 306, 406) angeordnete Bauelementdachkonstruktion (200, 300) nach einem der vorherigen Ansprüche.

7. Offshore-Umspannstation (202, 302, 402) nach Anspruch 6, **dadurch gekennzeichnet, dass** die horizontale Dachfläche (220, 320) der Bauelementdachkonstruktion (200, 300) mindestens eine weitere Dachkonstruktion (300') mit mindestens einer geneigten Dachfläche (316) zumindest teilweise überspannt.

8. Offshore-Umspannstation (202, 302, 402) nach Anspruch 6 oder 7, **dadurch gekennzeichnet, dass**
- mindestens eine vertikale Stütze (212, 312) der Seitenwand (208, 308) der Bauelementdachkonstruktion (200, 300) mit mindestens einem bestehenden Träger (326) des Oberdecks (206, 306, 406) zumindest kraftschlüssig verbunden ist, und
- an dem bestehenden Träger (326) mindestens eine Verstärkung (332), vorzugsweise eine aus GFK, CFK, Stahl und/oder Beton gebildete Verstärkung (332), zumindest kraftschlüssig befestigt ist, vorzugsweise angeklebt, angeschweißt, angenietet und/oder angeschraubt ist,
und/oder
- das Oberdeck (206, 306, 406) neben dem mindestens einen bestehenden Träger (326) mindestens einen zusätzlichen parallel zu dem bestehenden Träger (326) verlaufenden Träger aufweist.

9. Offshore-Umspannstation (202, 302, 402) nach einem der vorherigen Ansprüche, **dadurch gekennzeichnet, dass** an mindestens einem Träger (326) des Oberdecks (206, 306, 406), insbesondere an einem Verbindungsbereich (330) der zumindest kraftschlüssigen Verbindung zwischen der mindestens einen vertikalen Stütze (214, 314) der Seitenwand (208, 308) und dem mindestens einen Träger (326) des Oberdecks (206, 306, 406), und an mindestens einer Stütze (328) des Oberdecks (206, 306, 406) mindestens eine Lastverteilungseinheit (334, 336) befestigt ist.

10. Verwendung einer Bauelementdachkonstruktion (200, 300) nach einem der Ansprüche 1 bis 5 als Schwerlastdach zum Tragen von mindestens einem Objekt, insbesondere einem Objekt mit einer Flächenlast von mindestens 1,5 kN/m².
